Europäisches Patentamt

European Patent Office  (11) Numéro de publication: **0 327 433**

Office européen des brevets  **A1**

(12) **DEMANDE DE BREVET EUROPEEN**

(21) Numéro de dépôt: 89400230.2

(51) Int. Cl.⁴: **F 16 J 15/52**
F 16 D 3/84, F 16 N 37/00

(22) Date de dépôt: 27.01.89

(30) Priorité: 05.02.88 FR 8801340

(43) Date de publication de la demande:
09.08.89 Bulletin 89/32

(84) Etats contractants désignés: **DE ES GB**

(71) Demandeur: **REGIE NATIONALE DES USINES RENAULT
Boîte postale 103 8-10 avenue Emile Zola
F-92109 Boulogne-Billancourt (FR)**

(72) Inventeur: **Dallery, Bruno
Le Bourg
F-72170 Asse-le-Riboul (FR)**

**Pourceau, Jean-Marie
6, rue du Tertre
F-72380 Joue l'Abbe (FR)**

(74) Mandataire: **Ernst-Schonberg, Michel et al
REGIE NATIONALE DES USINES RENAULT (S. 0804)
F-92109 Boulogne Billancourt Cedex (FR)**

(54) Procédé de remplissage d'un soufflet d'étanchéité pour joints de transmission de véhicules automobiles.

(57) Procédé de remplissage d'un soufflet d'étanchéité pour joints de transmission de véhicules automobiles qui possède un corps à paroi ondulée d'épaisseur déterminée et deux collerettes (7, 8) d'extrémité respectivement emmanchées sur les parties menante et menée du joint de transmission dont l'une est constituée par un arbre (5) dont le diamètre extérieur est plus petit que le diamètre intérieur de la collerette (8) correspondante et qui met en oeuvre un dispositif de remplissage introduit entre l'arbre (5) et ladite collerette, caractérisé par le mode opératoire qui consiste à :
- déplacer axialement la collerette (8) le long de l'arbre (5) au delà d'une bague support (9) fixée rigidement et de manière étanche sur l'arbre,
- déplacer radialement la collerette par rapport à l'arbre pour confectionner un passage d'introduction du dispositif de remplissage et d'évacuation de l'air,
- ajuster la collerette (8) sur la bague support (9) après retrait du dispositif de remplissage.

FIG.2

Description

## PROCEDE DE REMPLISSAGE D'UN SOUFFLET D'ETANCHEITE POUR JOINTS DE TRANSMISSION DE VEHICULES AUTOMOBILES.

L'invention concerne un procédé de remplissage d'un soufflet d'étanchéité pour joints de transmission de véhicules automobiles du type comportant un corps à paroi ondulée d'épaisseur déterminée et deux collerettes d'extrémité emmanchées sur les parties menante et menée du joint dont l'une est constituée par un arbre.

Lors du montage du soufflet, il est connu de déformer radialement la collerette dans le but de favoriser l'introduction dans le soufflet d'une canule de remplissage de graisse qui permet également une mise à l'atmosphère de l'espace interne du soufflet au cours du processus de remplissage.

La publication EP-A 0.093.937 décrit un tel soufflet d'étanchéité dont les collerettes portent respectivement des canaux de remplissage et d'échappement d'air dont l'un reçoit une canule d'injection de graisse. Des colliers préalablement positionnés sur les collerettes immobilisent axialement les collerettes sur l'arbre et sur un élément du joint de transmission et ferment simultanément, par pincement, les canaux précités.

Lorsque le soufflet d'étanchéité utilise un matériau thermoplastique, les contraintes de montage et de remplissage sont inadaptées aux caractéristiques intrinsèques du matériau si bien que le processus de remplissage de graisse précédemment utilisé ne peut plus être mis en oeuvre.

L'invention a pour objet un procédé particulièrement simple de remplissage et de mise à l'atmosphère d'un tel soufflet et qui, le cas échéant, est adaptable à tout soufflet existant non pourvu de dispositions spécifiques constructives de remplissage et de mise à l'atmosphère.

L'invention concerne plus particulièrement un procédé de remplissage d'un soufflet monté sur un arbre dont le diamètre extérieur est plus petit que le diamètre intérieur de la collerette correspondante et qui met en oeuvre un dispositif de remplissage introduit entre l'arbre et ladite collerette.

Selon l'invention, le mode opératoire consiste à :
- déplacer axialement la collerette le long de l'arbre au delà d'une bague support fixée rigidement et de manière étanche sur l'arbre.
- déplacer radialement la collerette par rapport à l'arbre pour confectionner un passage d'introduction du dispositif de remplissage et d'évacuation de l'air.
- ajuster la collerette sur la bague support après retrait du dispositif de remplissage.

Le procédé favorise, par conséquent, l'emploi de soufflets conventionnels sans caractéristiques constructives spécifiques au remplissage et d'arbres sur lesquels la portée de la bague peut comporter, le cas échéant, un moletage d'immobilisation angulaire de la bague et une gorge de réception d'un joint torique à défaut d'une immobilisation de la bague par simple collage associé, le cas échéant, à l'emploi de pates d'étanchéité.

D'autres caractéristiques et avantages du procédé apparaîtront à la lecture de la description qui suit faite en référence au dessin annexé sur lequel :
- La figure 1 est une vue en coupe axiale d'un joint de transmission équipé d'un soufflet dans sa position de fonctionnement,

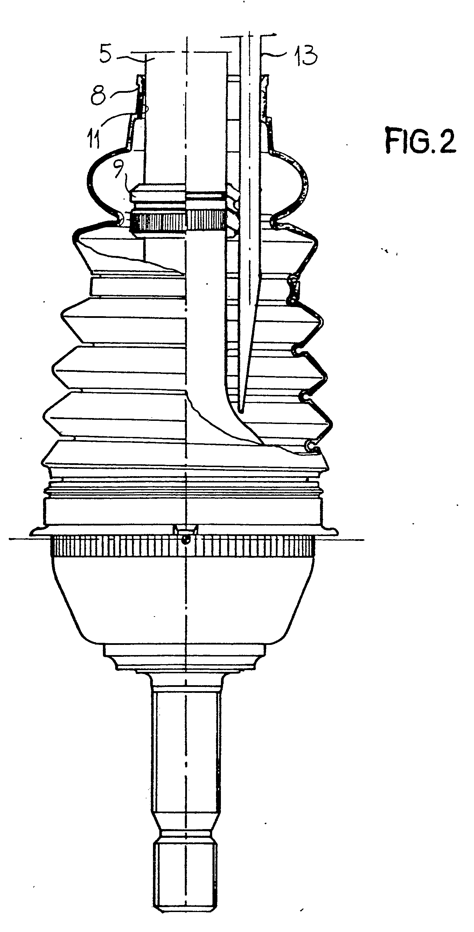

- La figure 2 est une vue à une plus grande échelle de la partie du soufflet d'étanchéité faisant application du procédé de remplissage.

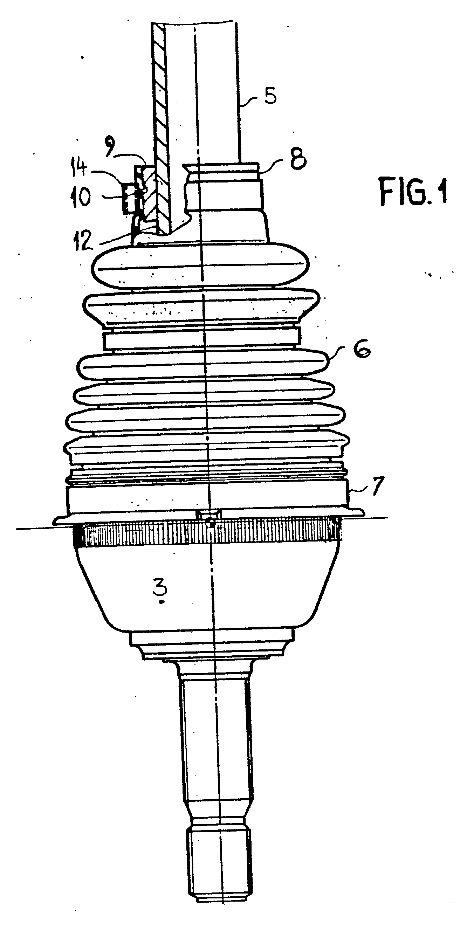

Le joint de transmission représenté à la figure 1 est ici du type tripode qui comprend notamment un triaxe à galets solidaire d'un bol 3. Une tulipe à rampes de coulissement des galets est solidaire d'un arbre 5.

Un soufflet d'étanchéité 6 comportant un corps en matériau thermoplastique à paroi ondulée d'épaisseur déterminée possède deux collerettes d'extrémité 7, 8 respectivement emmanchées sur le bol 3 et sur l'arbre 5, ce dernier portant une bague 9 de réception d'une nervure 10 annulaire portée par la surface intérieure 11 de la collerette 8. La bague 9 est montée sur une portée 12 de l'arbre 5. A cet effet, la portée 12 comporte un moletage d'immobilisation en rotation de la bague 9 et une gorge de réception d'un joint d'étanchéité torique.

Selon une autre variante de montage de la bague 9, la fonction étanchéité est réalisée par un joint de colle ou de pate d'étanchéité.

Selon une variante de montage de la bague 9, la fonction d'immobilisation et d'étanchéité est remplie par une liaison collée de la bague 9 sur l'arbre 5.

Ainsi que cela apparaît sur les figures, le diamètre extérieur de l'arbre 5 est nettement plus petit que le diamètre intérieur de la collerette 8 qui peut reposer de ce fait sur la bague 9.

Pour le remplissage du soufflet par une canule 13, il suffit de déplacer axialement la collerette 8 puis de la déplacer radialement par rapport à l'arbre 5 pour confectionner un passage d'introduction de la canule de remplissage 13 et l'évacuatioin de l'air contenu dans le soufflet au cours de ce même remplissage.

A la suite du remplissage, et après avoir retiré la canule 13, la collerette est ajustée sur la bague 9 et serrée sur celle-ci à l'aide d'un collier 14.

## Revendications

1) Procédé de remplissage d'un soufflet d'étanchéité pour joints de transmission de véhicules automobiles qui possède un corps à paroi ondulée d'épaisseur déterminée et deux collerettes (7, 8) d'extrémité respectivement emmanchées sur les parties menante et menée du joint de transmission dont l'une est constituée par un arbre (5) dont le diamètre extérieur est plus petit que le diamètre intérieur de la collerette (8) correspondante et qui met en oeuvre un dispositif de remplissage introduit entre l'arbre (5) et ladite collerette, caractérisé par le mode opératoire qui consiste à :
- déplacer axialement la collerette (8) le long de l'arbre (5) au delà d'une bague support (9) fixée rigidement et de manière étanche sur l'arbre,
- déplacer radialement la collerette par rapport à l'arbre pour confectionner un passage d'introduction du dispositif de remplissage et d'évacuation de l'air,
- ajuster la collerette (8) sur la bague support (9) après retrait du dispositif de remplissage.

EP 0 327 433 A1

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 580 761 (C.P.I.O.) <br> * Figures 14,15; page 11, lignes 10-16 * <br> --- | 1 | F 16 J 15/52 <br> F 16 D 3/84 <br> F 16 N 37/00 |
| A | DE-A-2 304 042 (VOLKSWAGEN) <br> * Figure; revendication * <br> ----- | 1 | |

DOMAINES TECHNIQUES
RECHERCHES (Int. Cl.4)

F 16 J
F 16 N
F 16 D

Le présent rapport a été établi pour toutes les revendications

| Lieu de la recherche | Date d'achèvement de la recherche | Examinateur |
|---|---|---|
| LA HAYE | 06-04-1989 | NARMINIO A. |

EPO FORM 1503 03.82 (P0402)